# EUROPÄISCHE PATENTSCHRIFT

(11) **EP 3 641 909 B1**
(45) Veröffentlichungstag und Bekanntmachung des Hinweises auf die Patenterteilung: **20.10.2021**
(21) Anmeldenummer: 18733548.4
(22) Anmeldetag: 15.06.2018
(51) Int. Cl.: B01D 35/30, B01D 46/00, B01D 46/24

(54) **FILTERSYSTEM MIT FILTERELEMENT UND SEKUNDÄRELEMENT ZUM VERSCHLIESEN EINES MITTELROHRS**
FILTER SYSTEM WITH FILTER ELEMETN AND SECONDARY ELEMENT FOR CLOSING A CENTRAL TUBE
SYSTEME DE FILTRATION AVEC ELEMENTE FILTRANT ET ELEMENTE SECONDAIRE POUR FERMER UN CONDUIT CENTRAL

(30) Priorität: 21.06.2017 DE 102017005797
(43) Veröffentlichungstag der Anmeldung: 29.04.2020
(73) Patentinhaber: MANN+HUMMEL GmbH, 71636 Ludwigsburg (DE)
(72) Erfinder: LÖHL, Thomas, 74395 Mundelsheim (DE)
(74) Vertreter: Mann + Hummel Intellectual Property
(86) Internationale Anmeldenummer: PCT/EP2018/065966
(87) Internationale Veröffentlichungsnummer: WO 2018/234182

(56) Entgegenhaltungen:
- EP-A1- 2 510 995
- DE-A1-102014 012 947
- GB-A- 1 553 011
- US-A1- 2014 326 081

## Beschreibung

### Technisches Gebiet

Die Erfindung betrifft ein Filtersystem mit einem Filterelement und einem Sekundärelement, insbesondere als Luftfilter einer Brennkraftmaschine oder eines Druckluftkompressors, sowie ein Filterelement und ein Sekundärelement für ein solches Filtersystem und ein Verfahren zum Austausch des Filterelements in dem Filtersystem.

### Stand der Technik

Aus der EP 1 163 039 B1 ist ein Luftfilter mit einem topfförmigen Gehäuse bekannt, in das eine Rundfilterpatrone derart dichtend eingebaut ist, dass das zu reinigende Fluid den Filtereinsatz von einem Einlass zu einem Auslass hin durchströmt. Eine der Gehäuseschalen ist einteilig mit einem Stützrohr hergestellt, welches zur Aufnahme der Filterpatrone vorgesehen ist, und welches ein Filtermedium reinseitig abstützt. Weiterhin sind das Stützrohr und die Rundfilterpatrone konisch ausgeführt. Das Stützrohr ist dabei derart ausgeführt, dass in axialer Richtung des Topfgehäuses gesehen, keine Hinterschneidungen auftreten. Da das Stützrohr eine gitterartige Struktur aufweist, ist dies nur bei einer konischen Form möglich.

Die GB 1 553 011 offenbart ein Filtersystem für Gase mit einem granularen Filtermaterial, das in ein Gehäuse eingefüllt ist. Das gefilterte Gas verlässt das Gehäuse über ein perforiertes Mittelrohr.

In der DE 10 2014 012 947 A1 ist ein Filtersystem mit einem auswechselbaren Filterelement, einem gehäusefesten konzentrischen Stützrohr und einem Sekundärelement beschrieben.

### Offenbarung der Erfindung

Eine Aufgabe der Erfindung ist es, ein Filtersystem mit einem Filterelement zu schaffen, welches einen einfachen und sicheren Austausch des Filterelements ermöglicht.

Weitere Aufgaben der Erfindung sind, ein Verfahren zum Austausch eines Filterelements in einem Filtersystem anzugeben, sowie ein Filterelement und ein Sekundärelement für ein solches Filtersystem zu schaffen.

Die vorgenannten Aufgaben werden nach einem Aspekt der Erfindung gelöst von einem Filtersystem zum Filtern eines Fluids nach Anspruch 1. Das Filtersystem umfasst ein Filtergehäuse, ein konzentrisch zu einer Gehäuseachse angeordnetes Mittelrohr, welches wenigstens auf einem Teil seiner axialen Länge einen radial offenen Bereich und bevorzugt auf einem zweiten Teil seiner axialen Länge einen rohrförmig geschlossenen, fluidundurchlässigen Bereich aufweist, ein Sekundärelement, welches rohrförmig ausgebildet ist und innerhalb des Mittelrohrs entlang der Gehäuseachse zwischen wenigstens zwei Betriebspositionen verschieblich angeordnet ist, sowie ein Filterelement, wobei das Filterelement einen um seine Längsachse angeordneten Filterbalg mit einer ersten Endscheibe an einer ersten Stirnseite und einer zweiten Endscheibe an einer zweiten Stirnseite umfasst, wobei die Endscheiben zentrale Öffnungen zur Aufnahme des Mittelrohrs im Inneren des Filterelements aufweisen, und wobei das Sekundärelement in der ersten Betriebsposition einen Fluidpfad durch den offenen Bereich des Mittelrohrs freigibt und in der zweiten Betriebsposition den Fluidpfad durch den offenen Bereich verschließt.

Günstige Ausgestaltungen und Vorteile der Erfindung ergeben sich aus den weiteren Ansprüchen, der Beschreibung und der Zeichnung.

Es wird ein Filtersystem zum Filtern eines Fluids vorgeschlagen, umfassend ein Filtergehäuse aus einem Gehäuseoberteil und einem Gehäuseunterteil, die sich entlang einer Gehäuseachse erstrecken, einen am Filtergehäuse angeordneten Einlassstutzen zum Zuführen eines zu filternden Fluids, einen am Gehäuseunterteil insbesondere konzentrisch zu der Gehäuseachse angeordneten Auslassstutzen zur Ableitung des gefilterten Fluids, ein konzentrisch zu der Gehäuseachse angeordnetes Mittelrohr, welches mit dem Auslassstutzen in wenigstens einem Betriebszustand strömungsmäßig verbunden ist, und welches wenigstens auf einem Teil seiner axialen Länge einen radial offenen Bereich aufweist, ein Sekundärelement, welches rohrförmig ausgebildet ist und innerhalb des Mittelrohrs entlang der Gehäuseachse zwischen wenigstens zwei Betriebspositionen verschieblich angeordnet ist, sowie ein Filterelement, das eine Rohfluidseite von einer Reinfluidseite fluiddicht trennt. Strömungsmäßig verbunden bedeutet insbesondere, dass Fluid aus dem Inneren des Mittelrohrs oder aus dem darin angeordneten Sekundärelement in den insbesondere in Fortsetzung des Mittelrohrs angeordneten Auslassstutzen strömen kann. Das Filterelement umfasst einen um seine Längsachse angeordneten Filterbalg mit einer ersten Endscheibe an einer ersten Stirnseite und einer zweiten Endscheibe an einer zweiten Stirnseite, wobei die Endscheiben zentrale Öffnungen zur Aufnahme des Mittelrohrs im Inneren des Filterelements aufweisen. Das Sekundärelement gibt in der ersten Betriebsposition einen Fluidpfad durch den offenen Bereich des Mittelrohrs frei und verschließt in der zweiten Betriebsposition den Fluidpfad durch den offenen Bereich.

Bevorzugt erstreckt sich der radial offene Bereich des Mittelrohrs über die Hälfte der axialen Gesamtlänge des Mittelrohrs. Entsprechend erstreckt sich weiter bevorzugt der radial geschlossene Bereich des Mittelrohrs über die andere Hälfte der axialen Gesamtlänge des Mittelrohrs. Dabei ist es besonders bevorzugt, dass der radial offene Bereich dem Auslassstutzen zugewandt und der radial geschlossene Bereich dem Auslassstutzen abgewandt angeordnet sind.

Das Sekundärelement dient üblicherweise als Sicherheitselement des Filtersystems, welches bei einem Wechsel des Filterelements verhindert, dass Schmutzpartikel auf die Reinfluidseite gelangen können. Wenigstens ein Teil des Sekundärelements ist deshalb mit einem Filtermedium versehen. Im Stand der Technik ist das Sekundärelement unbeweglich mit dem Filtergehäuse verbunden. Dadurch durchströmt im normalen Betriebszustand die Luft als zu filterndes Fluid ständig erst das Filterelement und dann das Sekundärelement, wodurch die Luft einen zusätzlichen Strömungswiderstand erfährt.

Gemäß der Erfindung kann dies vorteilhaft vermieden werden, da das Sekundärelement verschiedene Einbauzustände annehmen kann, indem es verschieblich im Mittelrohr angeordnet ist. Das Mittelrohr weist dazu einen offenen Bereich auf, den das Sekundärelement in einer Betriebsposition verschließen kann und in einer anderen Betriebsposition freigeben kann. Somit kann im normalen Filterbetrieb ein Bypass im oder am Mittelrohr geöffnet werden, durch welchen die Luftströmung das Sekundärelement umgehen kann. Steht ein Austausch des Filterelements an, so kann der offene Bereich des Mittelrohrs mit dem Sekundärelement verschlossen werden, so dass beim Auswechseln des Filterelements keine Schmutzpartikel auf die Reinfluidseite gelangen können, sondern die Luft durch das Sekundärelement gefiltert wird. In beiden Betriebspositionen wird somit der radial offene Bereich des Mittelrohrs durchströmt, wobei stromab das Sekundärelement durchströmt wird in der Betriebsposition, in welcher es den offenen Bereich verschließt.

Das Filterelement ist an beiden Enden zur Aufnahme des Mittelrohrs offen ausgeführt, dichtet jedoch an beiden Enden gegen das Filtergehäuse, nämlich sowohl gegen das Gehäuseunterteil als auch gegen das Mittelrohr, welches mit dem Gehäuseunterteil verbunden ist. Das Filterelement dichtet jedoch nicht gegen das Gehäuseoberteil als Deckel, das zum Austausch des Filterelements abgenommen werden kann. Das Gehäuseoberteil kann bei verschlossenem Filtergehäuse, also auf das Gehäuseunterteil aufgesetztem Gehäuseoberteil, durch die Öffnung in der oberen Endscheibe radial innen oder außen unter die Stirnseitenebene des Mittelrohrs eintauchen oder zumindest so nahe an der Stirnseitenebene angeordnet sein, dass das zugewandte Ende des Filterelements, welches offen ausgeführt ist, damit verschlossen werden kann.

Vorteilhaft kann so gemäß der Erfindung der Durchströmungswiderstand des Filtersystems reduziert werden, den ein normales Sekundärelement in jedem Betriebszustand erzeugt. Die Durchströmungswiderstände für Sekundärelemente von Luftfiltern liegen für die Nennvolumenströme verschiedener Baugrößen typischerweise im Bereich 1 - 50 mbar. Durch die Bypass-Lösung für das Filtersystem wird dieser Durchströmungswiderstand vorteilhaft vermindert.

Ein weiterer Vorteil stellt eine Verminderung der Größe und des Materialbedarfs für das Sekundärelement dar. Das ständig durchströmte Sekundärelement aus dem Stand der Technik ist sehr groß dimensioniert, um einen möglichst niedrigen Durchströmungswiderstand aufzuweisen. Durch einen Bypass kann das Sekundärelement so klein dimensioniert werden, dass die Beladekapazität des Sekundärelements für den vergleichsweise kurzen Zeitraum des Filterelementwechsels gerade noch ausreicht.

Gemäß einer vorteilhaften Ausgestaltung kann das Sekundärelement eine axiale Länge aufweisen, die wenigstens so groß ist wie der Teil der axialen Länge des radial offenen Bereichs des Mittelrohrs. Auf diese Weise kann das Sekundärelement in der zweiten Betriebsposition für den Austausch des Filterelements den offenen Bereich abdecken, indem das Sekundärelement im Mittelrohr vor den offenen Bereich geschoben wird, so dass keine ungefilterte Luft auf die Reinfluidseite gelangen kann.

Gemäß einer vorteilhaften Ausgestaltung kann das Sekundärelement an seiner radialen Außenseite Dichtflächen und/oder Dichtungen zum Abdichten gegen das Mittelrohr aufweisen. Das Sekundärelement kann so seine Filterfunktion für den Austausch des Filterelements wirksam wahrnehmen, da keine ungefilterte Luft von der Rohfluidseite auf die Reinfluidseite gelangen kann.

Gemäß einer vorteilhaften Ausgestaltung können die Dichtflächen und/oder Dichtungen an entgegengesetzten Enden des Sekundärelements angeordnet sein. Auf diese Weise ist es möglich, die gesamte Länge des Sekundärelements mit dem Filtermedium zu versehen, da das Sekundärelement so an den Enden gegen das Mittelrohr abgedichtet werden kann. So kann eine möglichst große Filterwirkung des Sekundärelements erreicht werden.

Gemäß einer vorteilhaften Ausgestaltung kann das Filterelement Dichtungen aufweisen, von denen eine zum Abdichten der Rohfluidseite gegen das Filtergehäuse und eine gegen das Mittelrohr vorgesehen ist. Auf diese Weise ist es möglich, das Filtergehäuse durch Abnehmen des Gehäuseoberteils zu öffnen, um das Filterelement zu entnehmen, ohne dass das Risiko besteht, die Reinfluidseite mit Schmutzpartikeln zu verunreinigen. Das Gehäuseoberteil muss deswegen nicht gegen die Reinfluidseite dichten, sondern nur gegen die Umgebung.

Gemäß einer vorteilhaften Ausgestaltung kann wenigstens eine der Dichtungen des Filterelementes mit einer der Endscheiben verbunden sein. Durch eine gemeinsame Fertigung von Endscheiben und Dichtungen, beispielsweise in einem Kunststoffschäumprozess, beispielsweise mit Polyurethan, können Endscheiben und Dichtungen des Filterelements kostengünstig hergestellt werden, was die Fertigungskosten eines Filterelements insgesamt günstig gestalten lässt. Auch werden so Dichtheitsprobleme zwischen Filterbalg und Dichtung wirksam vermieden.

Gemäß einer vorteilhaften Ausgestaltung kann die Dichtung an der ersten Endscheibe zum Abdichten gegen das Filtergehäuse als Axialdichtung und/oder Radialdichtung ausgebildet sein und/oder die Dichtung an der zweiten Endscheibe zum Abdichten gegen das Mittelrohr als Radialdichtung ausgebildet sein. Eine solche Gestaltung der Dichtungen ermöglicht es, das Filterelement auf das Mittelrohr aufzuschieben und durch Aufsetzen auf den Boden des Gehäuseunterteils wirksam zwischen Rohfluidseite und Reinfluidseite zu dichten. Weiter kann das Filterelement mit der Radialdichtung auf wirksame Art gegen das Mittelrohr und auch damit zwischen Rohfluidseite und Reinfluidseite abgedichtet werden.

Das Sekundärelement ist an einem dem Auslassstutzen abgewandten Ende geschlossen. Durch den Abschluss des Sekundärelements an einem Ende wird die Reinfluidseite bei Verschieben des Sekundärelements vor den offenen Bereich des Mittelrohrs wirksam verschlossen. Dadurch ist keine zusätzliche Abdeckung des an einem oberen Ende offenen Mittelrohrs bei Entnahme des Filterelements nötig. Auch muss das Gehäuseoberteil dadurch das Mittelrohr im normalen Filterbetrieb nicht abdichten, was die Toleranzsituation bei der Fertigung des Filtergehäuses günstiger gestalten lässt.

Eine Wand des Sekundärelements weist wenigstens bereichsweise ein Filtermedium auf. Dadurch ist es möglich, mit dem Sekundärelement einen Notfilterbetrieb des Filtersystems vorzusehen, bei dem das Filterelement aus dem Filtergehäuse, beispielsweise zum Filterelementtausch, entnommen ist. Auf diese Weise kann beispielsweise ein Filterelementwechsel bei laufender Brennkraftmaschine durchgeführt werden, da die Luft, die von dem Filtersystem zur Brennkraftmaschine geleitet wird, durch das Sekundärelement gefiltert werden kann, wenn das Sekundärelement vor den offenen Bereich des Mittelrohrs geschoben wird und diesen Bereich abdeckt.

Gemäß einer vorteilhaften Ausgestaltung kann das Filterelement als Rundfilter ausgebildet sein. Ein als Rundfilter ausgebildetes Filterelement kann auf einfache Weise auf ein ebenfalls rundes Mittelrohr aufgeschoben werden. Dabei kann auch auf einfache Weise eine wirksame Abdichtung zwischen Filtergehäuse und Filterelement sowie zwischen Mittelrohr und Filterelement gewährleistet werden.

Gemäß einer vorteilhaften Ausgestaltung kann das Filterelement hohlzylinderförmig ausgebildet sein. Ein hohlzylinderförmig ausgebildetes Filterelement kann auf besonders einfache und zuverlässige Weise auf ein rundes Mittelrohr aufgeschoben werden. Dabei kann auch auf besonders einfache und zuverlässige Weise eine wirksame Abdichtung zwischen Filtergehäuse und Filterelement sowie zwischen Mittelrohr und Filterelement gewährleistet werden.

Gemäß einer vorteilhaften Ausgestaltung kann das Mittelrohr an einer dem Auslassstutzen abgewandten Stirnseitenebene beim Schließen des Filtergehäuses mit dem Gehäuseoberteil verschließbar sein. Auf diese Weise kann als weitere Sicherheit, zusätzlich zu dem am oberen Ende verschlossenen Sekundärelement, eine wirksame Abdichtung zwischen Rohfluidseite und Reinfluidseite im normalen Filterbetrieb erreicht werden. Dadurch kann auch die Dichtung zwischen Sekundärelement und dem Mittelrohr entlastet werden.

Gemäß einer vorteilhaften Ausgestaltung kann das Gehäuseoberteil bei verschlossenem Filtergehäuse in die Stirnseitenebene des Mittelrohrs eintauchen. Auf diese Weise kann das Filtersystem zusätzlich versteift werden, da so das obere, dem Auslassstutzen abgewandte Ende des Mittelrohrs mit dem Gehäuseoberteil verbunden werden kann und so das Mittelrohr fest gehalten werden kann. Dadurch wird das Filtersystem unempfindlicher gegenüber möglichen Vibrationen und Erschütterungen im Betrieb.

Nach einem weiteren Aspekt betrifft die Erfindung ein Verfahren zum Austausch eines Filterelements in einem Filtersystem nach Anspruch 10. Das Verfahren umfasst die Schritte - Abnehmen eines Gehäuseoberteils von einem Gehäuseunterteil eines Filtergehäuses; - Verschieben eines Sekundärelements entlang einer Gehäuseachse so, dass das Sekundärelement einen Fluidpfad durch einen offenen Bereich eines Mittelrohrs des Filtergehäuses verschließt, indem das Sekundärelement den offenen Bereich überdeckt;
- Abziehen des Filterelements von dem Mittelrohr entlang der Gehäuseachse.

Vorteilhaft kann gemäß der Erfindung beim Austausch des Filterelements das Sekundärelement in die zweite Betriebsposition geschoben werden, so dass das Sekundärelement den offenen Bereich des Mittelrohrs überdeckt, wodurch der offene Bypass der Fluidströmung im normalen Filterbetrieb geschlossen wird. Die auf die Reinfluidseite strömende Luft wird so durch das Sekundärelement zusätzlich gefiltert. Dadurch kann nach Öffnen des Filtergehäuses das Filterelement durch Abziehen vom Mittelrohr entnommen und ausgetauscht werden. Nach Einsetzen eines neuen Filterelements in umgekehrter Reihenfolge durch Aufschieben auf das Mittelrohr kann das Sekundärelement wieder in die erste Betriebsposition geschoben werden, wo es den offenen Bereich des Mittelrohrs als Bypass freigibt. Danach kann das Gehäuseoberteil wieder auf das Gehäuseunterteil aufgeschoben und damit das Filtergehäuse geschlossen werden. Damit ist das Filtersystem wieder voll betriebsbereit.

Nach einem weiteren Aspekt betrifft die Erfindung eine Verwendung eines Sekundärelements in einem erfindungsgemäßen Filtersystem nach Anspruch 11.Das Sekundärelement ist rohrförmig ausgebildet und innerhalb eines Mittelrohrs entlang einer Gehäuseachse eines Filtergehäuses des Filtersystems zwischen wenigstens zwei Betriebspositionen verschieblich angeordnet ist. Eine Wand des Sekundärelements weist dabei wenigstens bereichsweise ein Filtermedium auf.

Das Sekundärelement dient als Sicherheitselement des Filtersystems, welches bei einem Wechsel des Filterelements verhindert, dass Schmutzpartikel auf die Reinfluidseite gelangen können. Wenigstens ein Teil des Sekundärelements ist deshalb mit einem Filtermedium versehen.

Gemäß der Erfindung kann das Sekundärelement verschiedene Einbauzustände annehmen, indem es verschieblich im Mittelrohr angeordnet ist, welches einen offenen Bereich aufweist, den das Sekundärelement in einer Betriebsposition verschließen kann und in einer anderen Betriebsposition freigeben kann. Somit kann im normalen Filterbetrieb ein Bypass im Mittelrohr geöffnet werden, durch welchen die Luftströmung das Sekundärelement umgehen kann. Steht ein Austausch des Filterelements an, so kann der offene Bereich des Mittelrohrs mit dem Sekundärelement verschlossen werden, so dass beim Auswechseln des Filterelements keine Schmutzpartikel auf die Reinfluidseite gelangen können, sondern die Luft zusätzlich durch das Sekundärelement gefiltert wird.

Nach einem weiteren Aspekt betrifft die Erfindung eine Verwendung eines Filterelements in einem erfindungsgemäßen Filtersystem nach Anspruch 12.Das Filterelement weist eine Längsachse auf und umfasst einen um die Längsachse angeordneten Filterbalg mit einer ersten Endscheibe an einer ersten Stirnseite und einer zweiten Endscheibe an einer zweiten Stirnseite. Die Endscheiben weisen dabei Öffnungen zur Aufnahme eines Mittelrohrs eines Filtergehäuses im Inneren des Filterelements auf.

Das Filterelement ist an beiden Enden zur Aufnahme des Mittelrohrs offen ausgeführt, dichtet jedoch an beiden Enden gegen das Filtergehäuse, nämlich vorteilhaft sowohl gegen ein Gehäuseunterteil und gegen ein Mittelrohr, welches mit dem Gehäuseunterteil verbunden ist. Das Filterelement dichtet jedoch nicht gegen ein Gehäuseoberteil als Deckel, das zum Austausch des Filterelements abgenommen werden kann. Das Gehäuseoberteil kann bei verschlossenem Filtergehäuse, also auf das Gehäuseunterteil aufgesetztem Gehäuseoberteil, durch die Öffnung in der oberen Endscheibe radial innen oder außen unter die Stirnseitenebene des Mittelrohrs eintauchen oder zumindest so nahe an der Stirnseitenebene angeordnet sein, dass das zugewandte Ende des Filterelements, welches offen ausgeführt ist, damit axial abgestützt werden kann.

### Kurze Beschreibung der Zeichnungen

Weitere Vorteile ergeben sich aus der folgenden Zeichnungsbeschreibung. In den Zeichnungen sind Ausführungsbeispiele der Erfindung dargestellt. Die Zeichnungen, Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen. Es zeigen beispielhaft:
- Fig. 1: einen perspektivischen Längsschnitt durch ein Filtersystem nach einem Ausführungsbeispiel der Erfindung mit einem Sekundärelement in einer ersten Betriebsposition und offenem Filtergehäuse;
- Fig. 2: einen perspektivischen Längsschnitt durch das Filtersystem in Figur 1 mit dem Sekundärelement in einer zweiten Betriebsposition;
- Fig. 3: einen perspektivischen Längsschnitt durch das Filtersystem in Figur 1 mit dem Sekundärelement in einer zweiten Betriebsposition bei der Entnahme des Filterelements; und
- Fig. 4: einen perspektivischen Längsschnitt durch das Filtersystem in Figur 1 mit dem Sekundärelement in der ersten Betriebsposition und geschlossenem Filtergehäuse.

### Ausführungsformen der Erfindung

In den Figuren sind gleiche oder gleichartige Komponenten mit gleichen Bezugszeichen beziffert. Die Figuren zeigen lediglich Beispiele und sind nicht beschränkend zu verstehen.

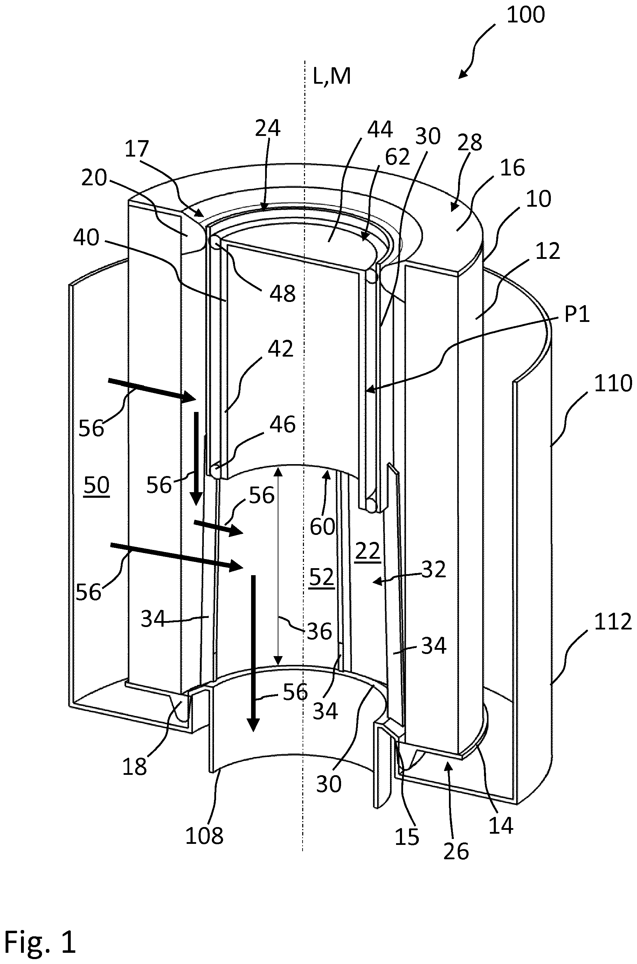

Figur 1 stellt einen perspektivischen Längsschnitt durch ein Filtersystem 100 nach einem Ausführungsbeispiel der Erfindung mit einem Sekundärelement 40 in einer ersten Betriebsposition P1 und offenem Filtergehäuse 110 dar.

Das Filtersystem 100 umfasst ein Filtergehäuse 110 aus einem Gehäuseoberteil 114, welches in Figur 1 weggelassen ist, und einem Gehäuseunterteil 112, die sich entlang einer Gehäuseachse M erstrecken, sowie einen am Filtergehäuse 110 angeordneten (nicht dargestellten) Einlassstutzen zum Zuführen eines zu filternden Fluids, und einen am Gehäuseunterteil 112 konzentrisch zu der Gehäuseachse M angeordneten Auslassstutzen 108 zur Ableitung des gefilterten Fluids. Ein konzentrisch zu der Gehäuseachse M angeordnetes Mittelrohr 30, welches mit dem Auslassstutzen 108 in wenigstens einem Betriebszustand strömungsmäßig verbunden ist, und welches wenigstens auf einem Teil 36 seiner axialen Länge einen radial offenen Bereich 32 aufweist, ist mit dem Gehäuseunterteil 112 verbunden. Der radial offene Bereich ist dem Auslassstutzen 108 zugewandt und ist wie gezeigt bevorzugt in dessen direkter Fortsetzung insbesondere unlösbar oder materialeinheitlich mit dem Gehäuseunterteil 112 ausgebildet und wird durch axiale Streben 34 des Mittelrohrs 30 versteift bzw. gebildet. Innerhalb des Mittelrohrs 30 ist ein Sekundärelement 40, welches rohrförmig ausgebildet ist, entlang der Gehäuseachse M zwischen wenigstens zwei Betriebspositionen P1, P2 verschieblich angeordnet. Der radial geschlossene Bereich des Mittelrohrs 30 ist wie bevorzugt rohrförmig geschlossen ausgebildet, schließt an den radial offenen Bereich an und ist dem Auslassstutzen 108 abgewandt. Wie gezeigt ist das axiale, dem Auslassstutzen 108 abgewandte Ende des Mittelrohrs 30 bzw. des radial geschlossenen Bereichs bevorzugt offen ausgeführt, um das Sekundärelement 40 warten zu können.

Weiter ist in dem Filtergehäuse 110 ein Filterelement 10 angeordnet, das eine Rohfluidseite 50 von einer Reinfluidseite 52 fluiddicht trennt, wobei das Filterelement 10 einen um seine Längsachse L angeordneten Filterbalg 12 mit einer ersten Endscheibe 14 an einer ersten Stirnseite 26 und einer zweiten Endscheibe 16 an einer zweiten Stirnseite 28 umfasst. Das Filterelement 10 ist als hohlzylinderförmiger Rundfilter ausgebildet. Die Endscheiben 14, 16 des Filterelements 10 weisen zentrale Öffnungen 15, 17 zur Aufnahme des Mittelrohrs 30 im Inneren 22 des Filterelements 10 auf. Der Filterbalg wird von radial außen nach innen von Luft durchströmt, was durch den Fluidpfad 56 dargestellt ist. Die gefilterte Luft wird durch den Auslassstutzen 108 aus dem Filtergehäuse 110 abgeleitet.

Das Filterelement 10 weist Dichtungen 18, 20 auf, von denen eine zum Abdichten der Rohfluidseite 50 gegen das Filtergehäuse 110 und eine gegen das Mittelrohr 30 vorgesehen ist. Die Dichtungen 18, 20 sind mit den Endscheiben 14, 16 verbunden, und können beispielsweise mit den Endscheiben 14, 16 in einem Kunststoffschäumprozess hergestellt sein. Die Dichtung 18 an der ersten Endscheibe 14 ist zum Abdichten gegen das Filtergehäuse 110 wie bevorzugt als Radialdichtung ausgebildet. Die Dichtung 20 an der zweiten Endscheibe 16 ist zum Abdichten gegen das Mittelrohr 30 als Radialdichtung ausgebildet.

Das Sekundärelement 40 gibt in der ersten Betriebsposition P1, welche in Figur 1 dargestellt ist, den Fluidpfad 56 durch den offenen Bereich 32 des Mittelrohrs 30 frei und verschließt in der zweiten Betriebsposition P2 den Fluidpfad 56 durch den offenen Bereich 32. Das Sekundärelement 40 weist dazu eine axiale Länge auf, die wenigstens so groß ist wie der Teil 36 der axialen Länge des radial offenen Bereichs 32 des Mittelrohrs 30. Weiter weist das Sekundärelement 40 an seiner radialen Außenseite Dichtflächen und/oder Dichtungen 46, 48 zum Abdichten gegen das Mittelrohr 30 oder das Gehäuseunterteil 112 auf. Die Dichtflächen und/oder Dichtungen 46, 48 sind an entgegengesetzten Enden 60, 62 des Sekundärelements 40 angeordnet. Das Sekundärelement 40 ist an einem dem Auslassstutzen 108 abgewandten Ende 62 mit einem Deckelabschluss geschlossen, so dass das Mittelrohr 30, in dem das Sekundärelement 40 mit den Dichtungen 46, 48 dicht verschieblich angeordnet ist, durch das Sekundärelement gegen die Rohfluidseite 50 abgedichtet ist. Die Wand 42 des Sekundärelements 40 weist wenigstens bereichsweise ein Filtermedium auf, so dass Luft das Sekundärelement 40, wenn es vor den offenen Bereich 32 des Mittelrohrs 30 geschoben ist, von radial außen durch das Sekundärelement 40 durchströmen kann und dabei gefiltert wird.

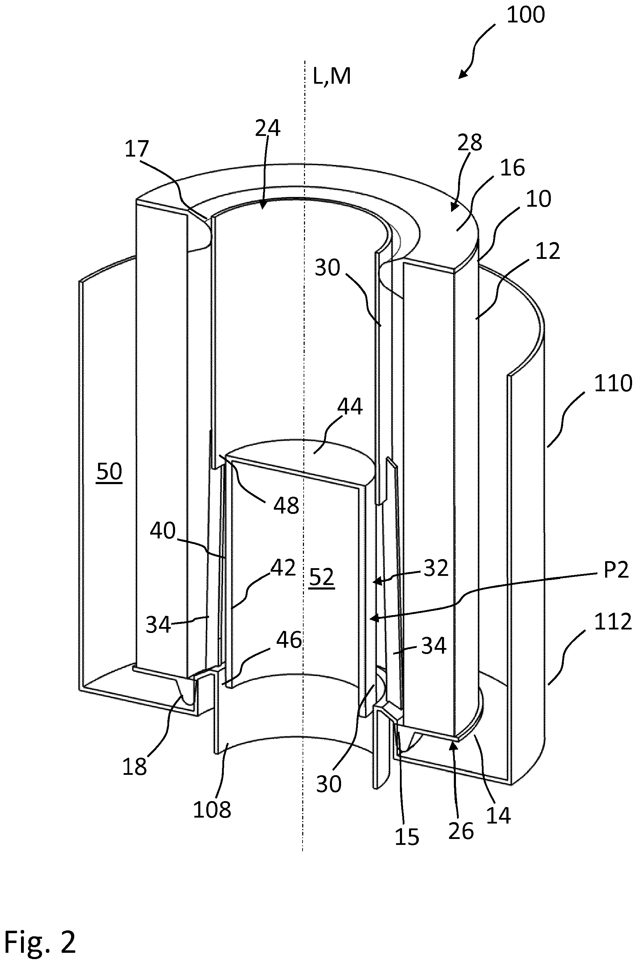

Figur 2 zeigt einen perspektivischen Längsschnitt durch das Filtersystem 100 in Figur 1 mit dem Sekundärelement 40 in einer zweiten Betriebsposition P2. In dieser Betriebsposition P2 ist das Sekundärelement 40 vor den offenen Bereich 32 des Mittelrohrs 30, d. h. in eine Position stromab, insbesondere unmittelbar stromab des offenen Bereichs 32 des Mittelrohrs 30 geschoben und deckt diesen komplett ab. Das Sekundärelement 40 dichtet mit seinen Dichtungen 46, 48 gegen die Innenseite des Mittelrohrs 30 und mit seinem Deckel 44 gegen die Rohfluidseite 50, so dass strömende Luft nur durch die als Filtermedium ausgebildete Wand 42 des Sekundärelements 40 auf die Reinfluidseite 52 gelangen kann und damit auch gefiltert wird.

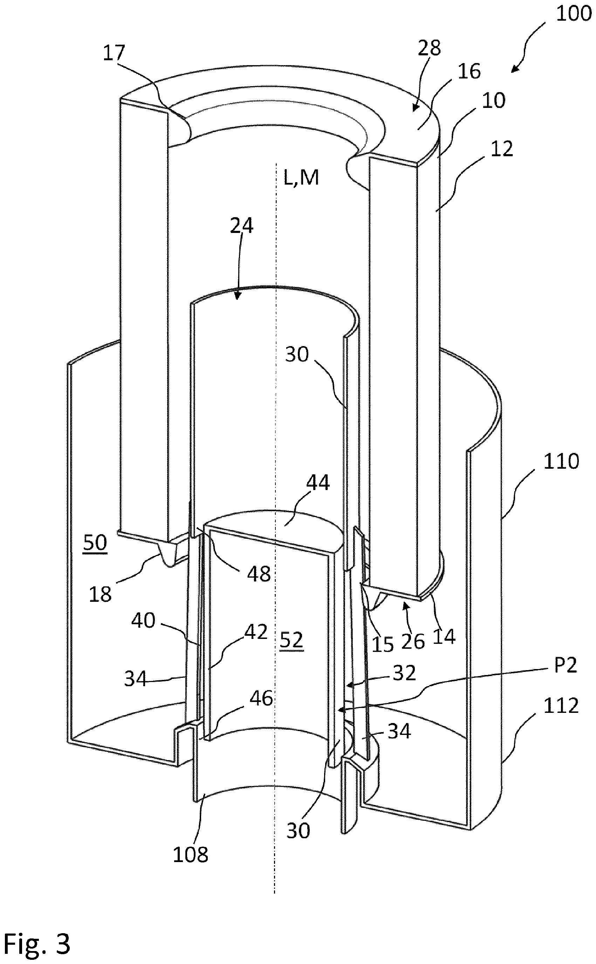

In Figur 3 ist ein perspektivischen Längsschnitt durch das Filtersystem 100 in Figur 1 mit dem Sekundärelement 40 in der zweiten Betriebsposition P2 bei der Entnahme des Filterelements 10 dargestellt.

Zum Austausch des Filterelements 10 wird zuerst das Gehäuseoberteil 114 von dem Gehäuseunterteil 112 des Filtergehäuses 110 abgenommen. Dann wird das Sekundärelement 40 entlang der Gehäuseachse M so verschoben, dass das Sekundärelement 40 den Fluidpfad 56 durch den offenen Bereich 32 des Mittelrohrs 30 des Filtergehäuses 110 verschließt, wie es in Figur 3 in der Betriebsposition P2 dargestellt ist. Damit ist die Reinfluidseite 52 durch das Sekundärelement 40 wirksam von der Rohfluidseite 50 getrennt, so dass nur noch durch das Sekundärelement 40 gefilterte Luft auf die Reinfluidseite 52 gelangen kann. Damit kann das Filterelement 10 von dem Mittelrohr 30 entlang der Gehäuseachse M nach oben abgezogen werden.

Beim Einsetzen eines neuen Filterelements 10 wird in umgekehrter Reihenfolge vorgegangen. Zuerst wird das Filterelement 10 auf das Mittelrohr 30 aufgeschoben, bis es im Gehäuseunterteil 112 unten aufsitzt und gegen Gehäuseunterteil 112 und Mittelrohr 30 dicht angeordnet ist. Danach kann das Sekundärelement 40 in die erste Betriebsposition P1 nach oben geschoben und damit der offene Bereich 32 als Bypass für den Fluidpfad 56 freigegeben werden. Zuletzt wird das Gehäuseoberteil 114 aufgesetzt, und das Filtersystem 100 ist wieder im betriebsbereiten Zustand.

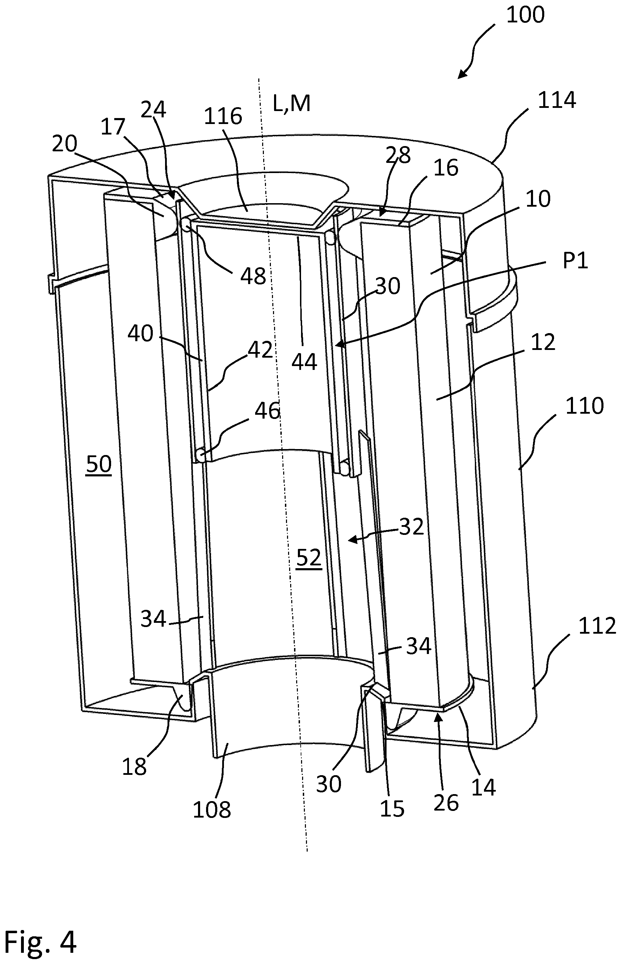

Figur 4 zeigt einen perspektivischen Längsschnitt durch das Filtersystem 100 in Figur 1 mit dem Sekundärelement 40 in der ersten Betriebsposition P1 und geschlossenem Filtergehäuse 110, bei dem das Gehäuseoberteil 114 auf das Gehäuseunterteil 112 aufgesetzt ist. Das Gehäuseoberteil 114 taucht dabei bei verschlossenem Filtergehäuse 110 in die Stirnseitenebene 24 des Mittelrohrs 30 mit einer zentralen Vertiefung 116 ein und kann als Anschlag für das Sekundärelement 40 dienen. Das Mittelrohr 30 ist an der dem Auslassstutzen 108 abgewandten Stirnseitenebene 24 durch das Sekundärelement 40 verschlossen. Dadurch, dass das Gehäuseoberteil 114 in die Stirnseitenebene 24 des Mittelrohrs 30 mit einer zentralen Vertiefung 116 eintaucht, kann das Mittelrohr 30 über die aufgesetzte Vertiefung 116 des Gehäuseoberteils 114 an diesem Ende zusätzlich fixiert und gegen Vibrationen oder Erschütterungen versteift werden. Die Vertiefung 116 des Gehäuseoberteils 114 greift dabei durch die Endscheibe 16 des Filterelements 10 zentral durch, was durch die Öffnung 17 der Endscheibe 16 ermöglicht wird.

## Patentansprüche

1. Filtersystem (100) zum Filtern eines Fluids, umfassend
- ein Filtergehäuse (110) aus einem Gehäuseoberteil (114) und einem Gehäuseunterteil (112), die sich entlang einer Gehäuseachse (M) erstrecken,
- einen am Filtergehäuse (110) angeordneten Einlassstutzen zum Zuführen eines zu filternden Fluids,
- einen am Gehäuseunterteil (112) insbesondere konzentrisch zu der Gehäuseachse (M) angeordneten Auslassstutzen (108) zur Ableitung des gefilterten Fluids,
- ein konzentrisch zu der Gehäuseachse (M) angeordnetes Mittelrohr (30), welches mit dem Auslassstutzen (108) in wenigstens einem Betriebszustand strömungsmäßig verbunden ist, und welches wenigstens auf einem Teil (36) seiner axialen Länge einen radial offenen Bereich (32) aufweist,
- ein Sekundärelement (40), welches rohrförmig mit einer rohrförmigen Wand (42) ausgebildet ist und innerhalb des Mittelrohrs (30) angeordnet ist, wobei die Wand (42) des Sekundärelements (40) wenigstens bereichsweise ein Filtermedium aufweist,
- ein Filterelement (10), das eine Rohfluidseite (50) von einer Reinfluidseite (52) fluiddicht trennt, wobei das Filterelement (10) einen um seine Längsachse (L) angeordneten Filterbalg (12) mit einer ersten Endscheibe (14) an einer ersten Stirnseite (26) und einer zweiten Endscheibe (16) an einer zweiten Stirnseite (28) umfasst, wobei die Endscheiben (14, 16) zentrale Öffnungen (15, 17) zur Aufnahme des Mittelrohrs (30) im Inneren (22) des Filterelements (10) aufweisen,
**dadurch gekennzeichnet, dass** das Sekundärelement (40) an einem dem Auslassstutzen (108) abgewandten Ende (62) geschlossen ist, dass das Sekundärelement (40) eine axiale Länge aufweist, die wenigstens so groß ist wie der Teil (36) der axialen Länge des radial offenen Bereichs (32) des Mittelrohrs (30) und dass das Sekundärelement (40) innerhalb des Mittelrohrs (30) entlang der Gehäuseachse (M) zwischen wenigstens zwei Betriebspositionen (P1, P2) verschieblich angeordnet ist und in der ersten Betriebsposition (P1) einen Fluidpfad (56) durch den offenen Bereich (32) des Mittelrohrs (30) freigibt und in der zweiten Betriebsposition (P2) den Fluidpfad (56) durch den offenen Bereich (32) verschließt, indem das Sekundärelement (40) den offenen Bereich (32) überdeckt und das Fluid die Wand (42) des Sekundärelements (40) von radial außen durchströmt.

2. Filtersystem nach Anspruch 1, wobei das Sekundärelement (40) an seiner radialen Außenseite Dichtflächen und/oder Dichtungen (46, 48) zum Abdichten gegen das Mittelrohr (30) aufweist.

3. Filtersystem nach Anspruch 2, wobei die Dichtflächen und/oder Dichtungen (46, 48) an entgegengesetzten Enden (60, 62) des Sekundärelements (40) angeordnet sind.

4. Filtersystem nach einem der vorhergehenden Ansprüche, wobei das Filterelement (10) Dichtungen (18, 20) aufweist, von denen eine zum Abdichten der Rohfluidseite (50) gegen das Filtergehäuse (110) und eine gegen das Mittelrohr (30) vorgesehen ist.

5. Filtersystem nach Anspruch 4, wobei wenigstens eine der Dichtungen (18, 20) mit einer der Endscheiben (14, 16) verbunden ist.

6. Filtersystem nach Anspruch 4 oder 5, wobei die Dichtung (18) an der ersten Endscheibe (14) zum Abdichten gegen das Filtergehäuse (110) als Axialdichtung ausgebildet ist und/oder wobei die Dichtung (20) an der zweiten Endscheibe (16) zum Abdichten gegen das Mittelrohr (30) als Radialdichtung ausgebildet ist.

7. Filtersystem nach einem der vorhergehenden Ansprüche, wobei das Filterelement (10) als Rundfilter ausgebildet ist.

8. Filtersystem nach einem der vorhergehenden Ansprüche, wobei das Mittelrohr (30) an einer dem Auslassstutzen (108) abgewandten Stirnseitenebene (24) beim Schließen des Filtergehäuses (110) mit dem Gehäuseoberteil (114) verschließbar ist.

9. Filtersystem nach einem der vorhergehenden Ansprüche, wobei das Gehäuseoberteil (114) bei verschlossenem Filtergehäuse (110) in die Stirnseitenebene (24) des Mittelrohrs (30) eintaucht.

10. Verfahren zum Austausch eines Filterelements (10) in einem Filtersystem (100) nach einem der vorherigen Ansprüche, umfassend die Schritte
- Abnehmen eines Gehäuseoberteils (114) von einem Gehäuseunterteil (112) eines Filtergehäuses (110);
- Verschieben eines Sekundärelements (40) entlang einer Gehäuseachse (M) so, dass das Sekundärelement (40) einen Fluidpfad (56) durch einen offenen Bereich (32) eines Mittelrohrs (30) des Filtergehäuses (110) verschließt, indem das Sekundärelement (40) den offenen Bereich (32) des Mittelrohrs (30) überdeckt;
- Abziehen des Filterelements (10) von dem Mittelrohr (30) entlang der Gehäuseachse (M).

11. Verwendung eines rohrförmig ausgebildeten Sekundärelements (40) mit einer rohrförmigen Wand (42), welche wenigstens bereichsweise ein Filtermedium aufweist, und mit Dichtflächen und/oder Dichtungen (46, 48) zum Abdichten gegen das Mittelrohr (30), welche an entgegengesetzten Enden (60, 62) des Sekundärelements (40) an seiner radialen Außenseite angeordnet sind, in einem Filtersystem nach einem der Ansprüche 1 bis 9.

12. Verwendung eines Filterelements mit einer Längsachse (L), umfassend einen um die Längsachse (L) angeordneten Filterbalg (12) mit einer ersten Endscheibe (14) an einer ersten Stirnseite (26) und einer zweiten Endscheibe (16) an einer zweiten Stirnseite (28), wobei die Endscheiben (14, 16) Öffnungen (15, 17) zur Aufnahme eines Mittelrohrs (30) eines Filtergehäuses (110) im Inneren (22) des Filterelements (10) aufweisen, in einem Filtersystem (100) nach einem der Ansprüche 1 bis 9.

## Claims

1. Filter system (100) for filtering a fluid, comprising
- a filter housing (110) made of a housing upper part (114) and a housing lower part (112) which extend along a housing axis (M),
- an inlet port disposed at the filter housing (110) for supplying a fluid to be filtered,
- an outlet port (108) disposed at the housing lower part (112), in particular concentrically, with respect to the housing axis (M) for discharging the filtered fluid,
- a central tube (30) disposed concentrically with respect to the housing axis (M), which central tube is fluidically connected to the outlet nozzle (108) in at least one operating state, and which features a radially open area (32) on at least one part (36) of its axial length,
- a secondary element (40), which is tubularly designed with a tubular wall (42) and disposed inside the central tube (30), wherein the wall (42) of the secondary element (40) features a filter medium at least in some areas,
- a filter element (10) which separates a raw fluid side (50) from a clean fluid side (52) in a fluid-tight manner, wherein the filter element (10) comprises a filter bellows (12) disposed around its longitudinal axis (L) with a first end disc (14) at a first front face (26) and a second end disc (16) at a second front face (28), wherein the end discs (14, 16) feature central openings (15, 17) for receiving the central tube (30) in the interior (22) of the filter element (10),
**characterized in that** the secondary element (40) is closed at an end (62) facing away from the outlet port (108), **in that** the secondary element (40) features an axial length which is at least as large as the part (36) of the axial length of the radially open area (32) of the central tube (30) and **in that** the secondary element (40) is displaceably disposed inside the central tube (30) along the housing axis (M) between at least two operating positions (P1, P2) and opens, in the first operating position (P1), a fluid path (56) through the open area (32) of the central tube (30) and closes, in the second operating position (P2), the fluid path (56) through the open area (32) while the secondary element (40) covers the open area (32) and the fluid flows through the wall (42) of the secondary element (40) from radially outside.

2. Filter system according to claim 1, wherein the secondary element (40) features at its radial exterior side sealing surfaces and/or seals (46, 48) for sealing against the central tube (30).

3. Filter system according to claim 2, wherein the sealing surfaces and/or seals (46, 48) are disposed at opposite ends (60, 62) of the secondary element (40).

4. Filter system according to one of the preceding claims, wherein the filter element (10) features seals (18, 20), one of which is provided for sealing the raw fluid side (50) against the filter housing (110) and the other one for sealing against the central tube (30).

5. Filter system according to claim 4, wherein at least one of the seals (18, 20) is connected to one of the end discs (14, 16).

6. Filter system according to claim 4 or 5, wherein the seal (18) at the first end disc (14) is designed as axial seal for sealing against the filter housing (110) and/or wherein the seal (20) at the second end disc (16) is designed as radial seal for sealing against the central tube (30).

7. Filter system according to one of the preceding claims, wherein the filter element (10) is designed as round filter.

8. Filter system according to one of the preceding claims, wherein the central tube (30) is closable with the housing upper part (114) at a front face plane (24) facing away from the outlet port (108) when closing the filter housing (110).

9. Filter system according to one of the preceding claims, wherein the housing upper part (114) penetrates into the front face plane (24) of the central tube (30) when the filter housing (110) is closed.

10. Method for replacing a filter element (10) in a filter system (100) according to one of the preceding claims, comprising the steps
- Removing a housing upper part (114) from a housing lower part (112) of a filter housing (110);
- Displacing a secondary element (40) along a housing axis (M) so that the secondary element (40) closes a fluid path (56) through an open area (32) of a central tube (30) of the filter housing (110) by the secondary element (40) covering the open area (32) of the central tube (30);
- Withdrawing the filter element (10) from the central tube (30) along the housing axis (M).

11. Use of a tubularly designed secondary element (40) with a tubular wall (42) which features, at least in some areas, a filter medium, and with sealing surfaces and/or seals (46, 48) for sealing against the central tube (30) and which are disposed at opposite ends (60, 62) of the secondary element (40) on its radial exterior side, in a filter system according to one of the claims 1 to 9.

12. Use of a filter element with a longitudinal axis (L), comprising a filter bellows (12) disposed around the longitudinal axis (L) with a first end disc (14) at a first front face (26) and a second end disc (16) at a second front face (28), wherein the end discs (14, 16) feature openings (15, 17) for receiving a central tube (30) of a filter housing (110) in the interior (22) of the filter element (10), in a filter system (100) according to one of the claims 1 to 9.

## Revendications

1. Système de filtre (100) destiné à filtrer un fluide, comprenant
- un boîtier de filtre (110) constitué d'une partie supérieure de boîtier (114) et d'une partie inférieure de boîtier (112) qui s'étendent le long d'un axe de boîtier (M),
- une tubulure d'admission disposée sur le boîtier de filtre (110) et destinée à introduire un fluide à filtrer,
- une tubulure de sortie (108) disposée sur la partie inférieure de boîtier (112) notamment de manière concentrique par rapport à l'axe de boîtier (M) et destinée à évacuer le fluide filtré,
- un tube central (30) disposé de manière concentrique par rapport à l'axe de boîtier (M), lequel tube central est relié fluidiquement à la tubulure de sortie (108) dans au moins un état de fonctionnement et qui présente au moins sur une partie (36) de sa longueur axiale une région (32) radialement ouverte,
- un élément secondaire tubulaire (40) avec une paroi tubulaire (42) et disposé à l'intérieur du tube central (30), la paroi (42) de l'élément secondaire (40) présentant au moins dans certaines sections un milieu filtrant,
- un élément filtrant (10) qui sépare un côté de fluide brut (50) d'un côté de fluide pur (52) de manière étanche aux fluides, l'élément de filtre (10) comprenant un soufflet de filtre (12) disposé autour de son axe longitudinal (L) avec un premier disque d'extrémité (14) sur une première face frontale (26) et un second disque d'extrémité (16) sur une seconde face frontale (28), les disques d'extrémité (14, 16) présentant des orifices centrales (15, 17) destinées à recevoir le tube central (30) à l'intérieur (22) de l'élément filtrant (10),
**caractérisé en ce que** l'élément secondaire (40) est fermé au niveau d'une extrémité (62) orientée à l'opposé de la tubulure de sortie (108), **en ce que** l'élément secondaire (40) présente une longueur axiale qui est au moins aussi grande que la partie (36) de la longueur axiale de la région radialement ouverte (32) du tube central (30) et **en ce que** l'élément secondaire (40) est disposé de manière déplaçable à l'intérieur du tube central (30) le long de l'axe de boîtier (M) entre au moins deux positions de travail (P1, P2) et ouvre, dans la première position de travail (P1), un chemin de fluide (56) à travers la région ouverte (32) du tube central (30) et ferme, dans la seconde position de travail (P2), le chemin de fluide (56) à travers la région ouverte (32) du fait que l'élément secondaire (40) recouvre la région ouverte (32) et le fluide s'écoule radialement depuis l'extérieur à travers la paroi (42) de l'élément secondaire (40).

2. Système de filtre selon la revendication 1, l'élément secondaire (40) présentant au niveau de sa face extérieure des surfaces d'étanchéité et/ou des joints d'étanchéité (46, 48) destinés à étancher contre le tube central (30).

3. Système de filtre selon la revendication 2, les surfaces d'étanchéité et/ou les joints d'étanchéité (46, 48) étant disposés au niveau des extrémités opposées (60, 62) de l'élément secondaire (40).

4. Système de filtre selon l'une des revendications précédentes, l'élément filtrant (10) présentant des joints d'étanchéité (18, 20) dont l'un est prévu pour étancher le côté de fluide brut (50) contre le boîtier der filtre (110) et l'autre contre le tube central (30).

5. Système de filtre selon la revendication 4, au moins l'un des joints d'étanchéité (18, 20) étant relié à l'un des disques d'extrémité (14, 16).

6. Système de filtre selon la revendication 4 ou 5, le joint d'étanchéité (18) au niveau du premier disque d'extrémité (14) étant conçu en tant que joint axial pour assurer l'étanchéité contre le boîtier de filtre (110) et/ou le joint d'étanchéité (20) au niveau du second disque d'extrémité (16) étant conçu en tant que joint radial pour assurer l'étanchéité contre le tube central (30).

7. Système de filtre selon l'une des revendications précédentes, l'élément filtrant (10) étant réalisé en tant que filtre rond.

8. Système de filtre selon l'une des revendications précédentes, le tube central (30) pouvant être fermé avec la partie supérieure de boîtier (114) au niveau d'un plan de face frontale (24) orienté à l'opposé de la tubulure de sortie (108) lors de la fermeture du boîtier de filtre (110).

9. Système de filtre selon l'une des revendications précédentes, la partie supérieure de boîtier (114) pénétrant dans le plan de face frontale (24) du tube central (30) lorsque le boîtier de filtre (110) est fermé.

10. Procédé pour remplacer un élément filtrant (10) dans un système de filtre (100) selon l'une des revendications précédentes, comprenant les étapes
- Enlever une partie supérieure de boîtier (114) d'une partie inférieure de boîtier (112) d'un boîtier de filtre (110) ;
- Déplacer un élément secondaire (40) le long d'un axe de boîtier (M) de sorte que l'élément secondaire (40) ferme un chemin de fluide (56) à travers une région ouverte (32) d'un tube central (30) du boîtier de filtre (110) par l'intermédiaire de l'élément secondaire (40) recouvrant la région ouverte (32) du tube central (30) ;
- Retirer l'élément filtrant (10) du tube central (30) le long de l'axe de boîtier (M).

11. Utilisation d'un élément secondaire tubulaire (40) avec une paroi tubulaire (42) qui présente, au moins dans certaines sections, un milieu filtrant, et avec des surfaces d'étanchéité et/ou des joints d'étanchéité (46, 48) pour assurer l'étanchéité contre le tube central (30) et qui sont disposés au niveau des extrémités opposées (60, 62) de l'élément secondaire (40) au niveau de sa face extérieure radiale, dans un système de filtre selon l'une des revendications 1 à 9.

12. Utilisation d'un élément filtrant avec un axe longitudinal (L), comprenant un soufflet de filtre (12) disposé autour de l'axe longitudinal (L) avec un premier disque d'extrémité (14) au niveau d'une première face frontale (26) et un second disque d'extrémité (16) au niveau d'une seconde face frontale (28), les disques d'extrémité (14, 16) présentant des orifices (15, 17) destinées à recevoir un tube central (30) d'un boîtier de filtre (110) à l'intérieur (22) de l'élément filtrant (10), dans un système de filtre (100) selon l'une des revendications 1 à 9.
